# EUROPEAN PATENT SPECIFICATION

(11) **EP 0 879 854 B1**
(45) Date of publication and mention of the grant of the patent: **21.06.2006**
(21) Application number: 98303063.6
(22) Date of filing: 21.04.1998
(51) Int. Cl.: C08L 101/00

(54) **A resin composition for a fibre reinforced composite, a prepreg and a fibre reinforced composite**
Harzzusammensetzung für faserverstärkte Verbundwerkstoffe Prepreg und Faserverstärkte Verbundwerkstoffe
Composition de résine pour matériau composite renforcée de fibres, prepreg et matériau composite

(30) Priority: 21.04.1997 JP 10316797
(43) Date of publication of application: 25.11.1998
(73) Proprietor: TORAY INDUSTRIES, INC., Tokyo 103-8666 (JP)
(72) Inventor: Noda, Shunsaku, Iyo-gun, Ehime 791-3120 (JP); Oosedo, Hiroki, Iyo-gun, Ehime 791-3120 (JP); Oki, Nobuaki, Iyo-gun, Ehime 791-3120 (JP)
(74) Representative: Coleiro, Raymond

(56) References cited:
- EP-A- 0 390 187
- EP-A- 0 530 869
- WO-A-96/33688
- DATABASE WPI Section Ch, Week 9408 Derwent Publications Ltd., London, GB; Class A28, AN 94-062125 XP002088499 & JP 06 016788 A (NITTO DENKO CORP) , 25 January 1994
- DATABASE WPI Section Ch, Week 9237 Derwent Publications Ltd., London, GB; Class A14, AN 92-304182 XP002088500 & JP 04 209651 A (INAX CORP), 31 July 1992
- DATABASE WPI Section Ch, Week 9551 Derwent Publications Ltd., London, GB; Class A21, AN 95-401145 XP002088501 & JP 07 278412 A (TORAY IND INC) , 24 October 1995

## Description

The present invention relates to a resin composition for a fibre reinforced composite material, which can be used to produce a prepreg excellent in tackiness, drapability and windability around a mandrel, and also relates to a prepreg produced using the resin composition as a matrix resin and a fibre reinforced composite produced using the prepreg.

Since they are light in weight and have excellent mechanical properties, fibre reinforced composites consisting of reinforcing fibres and a matrix resin are widely used for sports goods such as golf shafts, fishing rods and tennis rackets, and also in the aerospace industry and other general industries.

Fibre reinforced composites are produced by various methods and, at present, it is widely practised to produce them using sheet-like intermediate materials called prepregs in which reinforcing fibres are impregnated with a matrix resin. According to this method, a plurality of prepreg sheets are laminated and heated, to be formed into a fibre reinforced composite.

Matrix resins used for prepregs include both thermosetting resins and thermoplastic resins, but in most cases, thermosetting resins are used. Above all, epoxy resins are mainly used since when cured, they have excellent mechanical and chemical properties such as heat resistance, stiffness, dimensional stability and chemicals resistance. The generally used term "thermosetting resin" and "epoxy resin" include two cases: a prepolymer and a cured product obtained by reacting a composition containing the prepolymer with other ingredients. In this specification, the terms "thermosetting resin" and "epoxy resin" are used to mean a prepolymer unless otherwise stated.

Problems often encountered in the use of a prepreg obtained using a thermosetting resin are the tackiness between overlaid prepreg sheets and the drapability of the prepreg. These properties greatly affect the prepreg handling convenience.

If the tackiness of a prepreg is too small, overlaid sheets of the prepreg are likely to be delaminated to present an inconvenience during the lamination procedure. On the contrary, if the tackiness of a prepreg is too large, it is difficult to separate the sheets of the prepreg once overlaid by mistake, for correction of the mistake. If the drapability of a prepreg is poor, the operating efficiency while laminating sheets of a prepreg on a mold or mandrel with a curved surface declines remarkably.

In recent years, especially sports goods such as golf shafts and fishing rods have become remarkably reduced in weight, and prepregs suitable for light-weight design are now in demand. Prepregs using high modulus fibres, especially high modulus carbon fibres as reinforcing fibres, have been in demand in recent years, especially in the markets mentioned above, because they allow easy lighter-weight design. Furthermore, the demand for progress with a high reinforcing fibre is also growing.

However, if high modulus carbon fibres are used as reinforcing fibres, the prepreg obtained declines in drapability. Furthermore, if the reinforcing fibre content is higher, tackiness tends to be lower because the amount of the resin distributed in surface regions of the prepreg becomes smaller. Thus, conventional prepregs using a matrix resin present a problem in that tackiness and/or drapability becomes insufficient.

Several proposals have therefore been made to improve the resin composition for obtaining good tackiness or drapability, as described later. However, these techniques generally present a problem in that tackiness can be improved only at the sacrifice of drapability.

Golf shafts and fishing rods are formed by winding prepregs around a mandrel with a relatively small diameter. If the force to delaminate a prepreg laminate exceeds the tackiness between the laminated sheets of the prepreg, the prepreg wound around a mandrel is delaminated to present an inconvenience during the winding operation. The force necessary to delaminate the prepreg is larger if the drapability is smaller. Therefore, even if the tackiness is improved at the sacrifice of drapability, the mandrel winding operation itself cannot be improved significantly.

Known methods to improve the tackiness of a prepreg include adding a high polymer such as a thermoplastic resin of an elastomer to an epoxy resin. Methods of adding a high polymer to an epoxy resin include methods of adding a polyvinyl formal resin as disclosed in JP-A-58-008724 and JP-A-55-027342. JP-A-55-108443 and JP-A-06-160756, a method of adding a polyester polyurethane as disclosed in JA-A-05-117423, a method of adding a poly(meth), acrylate polymer as disclosed in JP-A-54-099161, a method of adding a polyvinyl ether as disclosed in JP-A-04-130156 and a method of adding a nitrile rubber as disclosed in JP-A-02-020546.

However, these methods of adding a high polymer to an epoxy resin present a problem in that the resin viscosity rises to lower drapability even if the tackiness of the prepreg can be improved. However, it has been difficult to find any resin capable of achieving both satisfactory tackiness and satisfactory drapability in a prepreg with a large reinforcing fibre content using high elastic modulus carbon fibres and also difficult to obtain a prepreg which can be wound efficiently around a mandrel.

The present invention seeks to provide a resin composition which can be used to produce a prepreg excellent in tackiness, drapability and windability around a mandrel. The present invention also addresses the problem of providing a prepreg excellent in tackiness, drapability and windability around a mandrel, and a fibre reinforced composite obtained using the prepreg.

Accordingly, in a first aspect the present invention provides a prepreg comprising reinforcing fibers impregnated with a resin composition, the resin composition comprising at least components A and B, wherein component A is a thermosetting resin and component B is a thermoplastic resin having a weight average molecular weight of 200,000 to 5,000,000, component B is present in the resin composition in an amount of from 0.1 to 20 parts by weight per 100 parts by weight of component A and the difference in absolute value between a solubility parameter SP value of component A and that of component B is from 0 to 2 inclusive such that component B is soluble in component A, the resin composition having a complex viscosity η# in a dynamic viscoelasticity measurement at a measuring frequency of 0.5 Hz at 50°C of 200 to 2,000 Pa.s, a storage modulus G' of 100 to 2,000 Pa, and the complex viscosity η# (Pa.s) and the storage modulus G' (Pa) satisfy the following relationship: $0.9 \leq {G}^{′} / η# \leq 2.0$

In a second aspect the present invention provides a fibre reinforced composite, comprising a cured resin composition as described above in relation to the first aspect, and reinforcing fibers.

Preferred embodiments of the invention will now be described.

The thermosetting resins which can be used as the component A in the resin composition for a fibre reinforced composite of the present invention include epoxy resins, unsaturated polyester resins, vinyl ester resins, phenol resins, melamine resins, urea resins, silicone resin, maleimide resins, cyanate resins and preliminarily polymerized resins consisting of a maleimide resin and a cyanate resin. In the present invention, mixtures of these resins can also be used.

Among them, for a fibre reinforced composite, an epoxy resin excellent in heat resistance, elastic modulus and chemicals resistance can be especially preferably used.

As an epoxy resin, a compound with one or more epoxy groups in the molecule, preferably a compound with two or more epoxy groups in the molecule can be used. For an improved balance between the heat resistance and mechanical properties of the cured product, it is especially preferable to use a mixture consisting of a bifunctional epoxy resin (with two epoxy groups per molecule) and a trifunctional or higher functional epoxy resin (with three or more epoxy groups per molecule). In this case, if the amount of the trifunctional or higher functional epoxy resin is too large, it may happen that the cross linking density of the cured product may become to too high to obtain a high toughness. Hence, in the present invention, it is preferable to use 50 to 95 parts by weight of a bifunctional epoxy resin and 5 to 50 parts by weight of a trifunctional or higher functional epoxy resin per 100 parts by weight of the mixed epoxy resin.

Furthermore, an epoxy resin with a phenol, an amine and/or a compound having a carbon-carbon double band as a precursor can be preferably used having regard to the mechanical properties of the cured product and the reactivity with the curing agent.

An epoxy resin with a phenol as a precursor can obtained by reaction between a phenol and epichlorohydrin. The precursors which can be used here include bisphenols such as bisophenol A and bisphenol F, resorcinol,
dihydroxynaphthalene, trihydroxynaphthalene,
dihydroxybiphenyl, bishydroxyphenylfluorene,
trishydroxyphenylmethane, tetrahydroxyphenylethane, novolak and a condensation product of dicyclopentadiene and phenol.

An epoxy resin with an amine as a precursor can be obtained by reaction between an amine and epichlorohydrin. The precursors which can be used here, include tetraglycidyl diaminodiphenylmethane, aminophenol, aminocresol and xylenediamine.

An epoxy resin with a compound having a carbon-carbon double bond as a precursor can be obtained by oxidizing the carbon-carbon double bond in the precursor into an epoxy group. The precursors which can be used here include vinylcyclohexane, bis(3-vinylcyclohexylmethyl) adipate and 3-vinylcyclohexylmethl-3-vinylcyclohexanecarboxylate.

Bisphenol A type epoxy resins (epoxy resins with Bisphenol A as a precursor) include the following marketed resins;
"Epikote" (registered trade name) 825 (epoxy equivalent 172 - 178), "Epikote" 828 (epoxy equivalent 184 - 194). "Epikote" 834 (epoxy equivalent 230 - 270), "Epikote" 1001 (epoxy equivalent 450 - 500), "Epikote" 1002 (epoxy equivalent 600 - 700), "Epikote" 1003 (epoxy equivalent 670 - 770), "Epikote" 1004 (epoxy equivalent 875 - 975), "Epikote" 1007 (epoxy equivalent 1750-2200), "Epikote" 1009 (epoxy equivalent 2400-3300), "Epikote" 1010 (epoxy equivalent 3000 - 5000) (respectively produced by Yuka Shell Epoxy K.K.).

"Epotohto" (registered trade name) YD-128 (epoxy equivalent 184 - 194), "Epotohto" YD-011 (epoxy equivalent 450 - 500), "Epotohto" YD-014 (epoxy equivalent 900 - 1000), "Epotohto" YD-017 (epoxy equivalent 1750 - 2100). "Epotohto" YD-019 (epoxy equivalent 2400 - 3000). "Epototho" YD-022 (epoxy equivalent 4000 - 6000) (respectively produced by Tohto Kasei K.K.).

"Epicron" (registered trade name) 840 (epoxy equivalent 180 - 190), "Epicron" 850 (epoxy equivalent 184 - 194), "Epicron" 1050 (epoxy equivalent 450 - 500) (respectively produced by Dainippon Ink & Chemicals, Inc.).

"Sumi-epoxy" (registered trade name) ELA-128 (epoxy equivalent 184 - 194, produced by Sumitomo Chemical Co., Ltd.), DER331 (epoxy equivalent 182 - 192, produced by Dow Chemical) .

These resins have a chemical structure represented by the following formula (1): 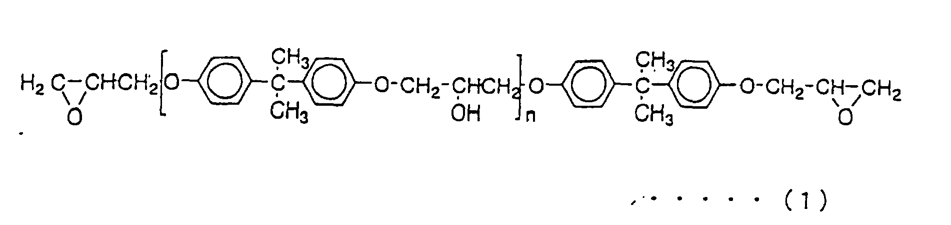 where n stands for a positive number

Bisphenol F type epoxy resins include "Epicron" 830 (epoxy equivalent 165 - 185, produced by Dainippon Ink & Chemicals, Inc.), "Epikote" 806 (epoxy equivalent 160 - 170), "Epikote" 807 (epoxy equivalent 160 - 175), "Epikote" E4002P (epoxy equivalent 610), "Epikote" E4003P (epoxy equivalent 800), "Epikote" E4004P (epoxy equivalent 930), "Epikote" E4007P (epoxy equivalent 2060), "Epikote" "4009P (epoxy equivalent 3030), "Epikote" E4010P (epoxy equivalent 4400) (respectively produced by Yuka Shell Epoxy K.K.), etc., and have a chemical structure represented by the following formula (2): 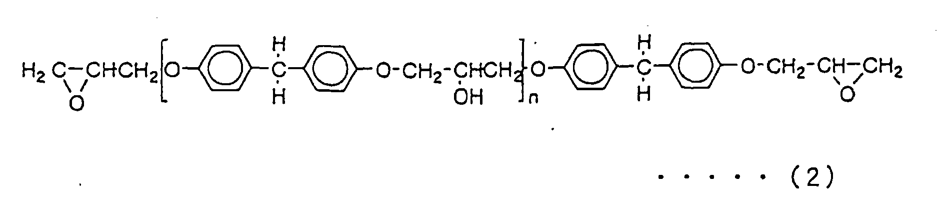 where n stands for a positive number

Phenol novolak type epoxy resins include marketed resins such as "Epikote" 152 (epoxy equivalent 172 - 179), "Epikote" 154 (epoxy equivalent 176 - 181) (respectively produced by Yuka Shell Epoxy K.K.), DER438 (epoxy equivalent 176 - 181, produced by Dow Chemical). "Araldite" (registered trade name) EPN1138 (epoxy equivalent 176 - 181), "Araldite" 1139 (epoxy equivalent 172 - 179 produced by Ciba), and have a chemical structure represented by the following formula (3) 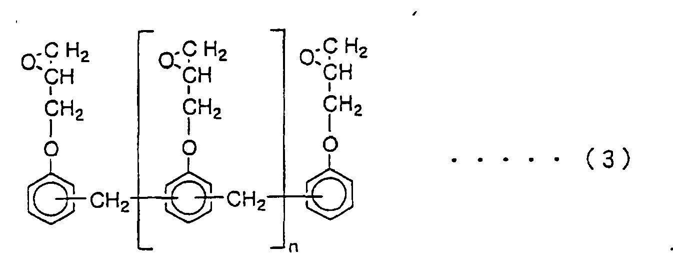 Furthermore, the following epoxy resins can be used:
Bisphenol S type epoxy resins marketed as "Epicron" EXA-1514 (epoxy equivalent 290 - 330, produced by Dainippon Ink & Chemicals, Inc.), and "Denacol" (registered trade name) EX-251 (epoxy equivalent 189, produced by Nagase Kasie Kogyo K.K.), tetrabroomobisphenol A type epoxy resins "Epikote" 5050 (epoxy equivalent 380 - 410, produced by Yuka Shell Epoxy K.K.); "Epicron" 152 (epoxy equivalent 340-380, produced by Dainippon Ink & Chemicals, Inc.), "Sumi-epoxy" ESB-400T (epoxy equivalent 380 - 420, produced by Sumitomo Chemical Co., Ltd.), and "Epotohto" YBD-60 (epoxy equivalent 350 - 370, produced by Tohto Kasei K.K.), resorcinol diglycidyl ether marketed as "Denacol" EX-201 (epoxy equivalent 118), hydroquinone diglycidyl ether marketed as "Denacol" EX-203 (epoxy equivalent 112) (respectively produced by Nagase Kasei Kogyo K.K.), 4,4'-dihydroxy-3, 3'-5,5'-tetramethylbiphenyl diglycidyl ether marketed as "Epikote" YX4000 (epoxy equivalent 180 - 192, produced by Yuka Shell Epoxy K.K.), diglycidyl ether of 1, 6-dihydronaphthalene marketed as "Epicron" HP-4032H (epoxy equivalent 250, produced by Dainippon Ink & Chemicals, Inc.), diglycidyl ether of 9, 9-bis (4-hydroxyphenyl) fluorene marketed as "Epon" HPT Resin 1079 (epoxy equivalent 250 - 260, produced by Shell), triglycidyl ether of tris(p-hydroxyphenyl) methane marketed as TACTIX742 (epoxy equivalent 150 - 157, produced by Dow Chemical), tetraglycidyl ether of tetrakis (p-hydroxyphenyl) ethane marketed as "Epikote" 1031S (epoxy equivalent 196, produced by Yuka Shell Epoxy K.K.), triglycidyl ether of glycerol marketed as "Denacol" EX-314 (epoxy equivalent 145, produced by Nagase Kasei Kogyo K.K.) and tetraglycidyl ether of pentaerythritol marketed as "Denacol" EX-411 (epoxy equivalent 231, produced by Nagase Kasei Kogyo K.K.).

Epoxy resins with an amine as a precursor include diglycidyl aniline, tetraglycidyl diaminodiphenylmethane marketed as "Sumi-epoxy" ELM434 (epoxy equivalent 110 - 130, produced by Sumitomo Chemical Co, Ltd.), tetraglycidyl m-xylylenediamine marketed as TETRA.D-X (epoxy equivalent 90 - 105, produced by Mitsubishi Gas Chemical Co., Inc.), triglycidyl-m-aminophenol marketed as "Sumi-epoxy" ELM120 (epoxy equivalent 118, produced by Sumitomo Chemical Co., Ltd.) and triglycidyl-p-aminophenol marketed as "Araldite" MY0510 (epoxy equivalent 94 - 107, produced by Ciba).

Polyepoxides obtained by oxidizing a compound having a plurability of double bonds in the molecular include ERL-4206 (epoxy equivalent 70 - 74), ERL-4221 (epoxy equivalent 131 - 143) and ERL-4234 (epoxy equivalent 133 - 154) respectively produced by Union Carbide. Furthermore, epoxylated soybean oil, for example, can also be used.

In addition to the above, glydicyl esters such as phthalic acid diglycidyl ester, terephthalic acid diglycidyl ester and dimer acid diglycidyl ester and triglycidyl isocyanurate can also be used.

The thermoplastic resin with a weight average molecular weight of 200,000 to 5,000,000 as the component B of the present invention is added to the matrix resin to control the viscoelasticity of the matrix and to provide both good tackiness and good drapability of the prepreg.

The high polymer added to the matrix resin to control viscoelasticity can be either a thermoplastic resin or an elastomer. However, if an elastomer is added, the cured product of the matrix resin declines in heat resistance and elastic modulus disadvantageously. Hence, in the present invention, a thermoplastic resin free the disadvantage can be suitable used. Furthermore, to obtain good heat resistance, a thermoplastic resin with a glass transition temperature of 80°C or higher or that with a melting point of 80°C or higher can be preferably used.

The tackiness and drapability of a prepreg and the windability around a mandrel depend on the prepreg production conditions, reinforcing fibres used and the viscoelasticity of the matrix resin. As compared with the prepreg production conditions and reinforcing fibres, the viscoelasticity of the matrix resin has a large influence upon the degree of freedom of design. Hence the viscoelasticity is an important factor for controlling the tackiness and drapability and improving the windability around a mandrel.

For the viscoelasticity of a matrix resin, several parameters are available. For the tackiness and drapability of a prepreg, complex viscosity η* and storage modulus G' are especially important parameters. Complex viscosity η* is generally recognised to have correlativity with drapability, and a prepreg using a matrix resin small in complex viscosity η* tends to be excellent in drapability. On the other hand, storage modulus G' is generally recognized to have correlativity with tackiness, and a prepreg using a matrix resin large in storage modulus G' tends to be excellent in tackiness.

The complex viscosity η* and storage modulus G' of a matrix resin are usually measured according to the dynamic viscoelasticity measuring method using parallel plates. Dynamic viscoelasticity changes depending upon the measuring temperature and the measuring frequency. As parameters providing a relatively good correlation between the tackiness and drapability of a prepreg near room temperature, the complex viscosity η* and storage modulus G' measured at 50°C at a frequency of 0.5 Hz are suitable.

If a thermoplastic resin is added to the thermosetting resin used as the matrix resin of a prepreg, the storage modulus G' rises with the increase in the amount of the thermoplastic resin added, to improve the tackiness of the prepreg, but simultaneously the complex viscosity η* also rises. Hence, the drapability declines, and it is difficult to keep both tackiness and drapability good. As for the windability of a prepreg around a mandrel, since the balance between tackiness and drapability is important, it is difficult to achieve a satisfactory windability around a mandrel with the prepreg obtained by this method.

We found that if a high molecular weight thermoplastic resin is dissolved in a thermosetting resin, the storage modulus G' increases remarkably as compared with the increase of complex viscosity η*, and that the increase is more remarkable when the molecular weight is larger. This finding allows tackiness to be improved remarkably without sacrificing drapability so much by adding a relatively small amount of a high molecular thermoplastic resin to a thermosetting resin. This is a new finding which, to our knowledge, is not stated or suggested in any literature concerning a matrix resin containing a high polymer compound.

If the molecular weight of the thermoplastic resin is small, the storage modulus G' cannot be increased sufficiently as compared with the increase of complex viscosity η*. Hence, it is necessary that the weight average molecular weight of the thermoplastic resin used in the present invention is 200,000 or more preferably is 350,000 or more.

On the other hand, if the molecular weight of the thermoplastic resin is too large, the viscoelasticity more greatly depends on the amount of the thermoplastic resin added. In this case, it can happen that control becomes difficult and that the dissolution of the thermoplastic resin into the thermosetting resin composition becomes difficult. Hence, it is necessary that the weight average molecular weight of the thermoplastic resin is 5,000,000 or less, and more preferably is 1,700,000 or less.

The mechanism in which the thermoplastic resin as the component B manifests the above mentioned effect of improving the viscoelasticity is considered to be that the molecular chains of the thermoplastic resin dissolved in the thermosetting resin used as the component A are entangled. Therefore, the thermoplastic resin used as the component B must be soluble in the thermosetting resin used as the component A. Even if the thermoplastic resin is soluble in the thermosetting resin, if the compatibility of both the resins is low, the molecular chains of the thermoplastic resin are not sufficiently spread, not allowing the effect of enranglement to be obtained. Hence, it is difficult to obtain a sufficient effect of improving the viscoelasticity.

As an index of solubility and compatibility solubility parameter SP value calculated from the molecular structure can be used. To obtain sufficient solubility and compatibility, it is proposed- that the difference in absolute value between the SP value of the thermoplastic resin used and the SP value of the thermosetting resin used is in a range of 0 to 2.

The difference in absolute value between the SP values can be kept small by, for example, optimizing the selection and mixing ratio of the raw materials of the thennosercing resin and selecting the structure of the thermoplastic resin. When the thermosetting resin used as the compound A is a mixture, the average value calculated as a sum of the values obtained by multiplying the SP values and weight percentages of the respective raw materials can be used.

If the amount of the thermoplastic resin added as the component B is too small, a sufficient effect cannot be obtained. If the amount is too large, the dissolution into the thermosetting resin becomes difficult. However, if a proper combination of the components A and B as described above is selected, it is not necessary to add the component B in a very large amount The amount of the thermoplastic resin added as the component B is 0.1 to 20 parts by weight per 100 parts by weight of component A, preferably 0.1 to 10 parts by weight per 100 parts by weight of the thermosetting resin used as the component A, and a more preferable range is 0.1 to 5 parts by weight.

The thermoplastic resins which can be used as the component B include various known resins. Above all, a polymer obtained by polymerizing a vinyl monomer can be preferably used since a polymer with a high molecular weight can be easily obtained. The vinyl monomer in this case is a low molecular weight compound with one polymerizable double bond in the molecule, and the polymer obtained by polymerizing the vinyl monomer means a polymer obtained by polymerizing a vinyl monomer component comprising one or a plurality of vinyl monomers, or a polymer obtained by polymerizing one or a plurality of vinyl monomers and one or a plurality of monomers other than vinyl monomers, or a polymer obtained by chemically modifying the side chains of any of these polymers by, for example, saponification or acetalation.

When a polymer obtained by polymerizing a vinyl monomer and a monomer other than a vinyl monomer is used, it is preferable that the amount of the vinyl monomer accounts for 70 mol% or more of all the monomers.

When an epoxy resin composition is used as the thermosetting resin, especially preferable vinyl monomers are (Meth) acrylic acid esters and vinylpyrrolidone since they are excellent in compatibility with the epoxy resin and since the cured product of the epoxy resin composition containing any of the vinyl monomers is excellent in physical properties. If a mixture consisting of a plurality of vinyl monomers is used, it is especially preferable that a (meth) acrylic acid ester or vinylpyrrolidone accounts for 50 mol % or more in the mixture, more preferable 80 mol % or more. In this specification, the expression (meth) acrylic acid ester is used to mean "methacrylic acid ester or acrylic acid ester". Furthermore, (meth) acrylate is used to mean "methacrylate or acrylate". (Meth) acrylic acid esters which can be used here include alkyl (meth) acrylates such as methyl (meth) acrylate, ethyl (meth) acrylate, butyl (meth) acrylate, 2-ethylhexyl (meth) acrylate, octyl (meth) acrylate, propyl (meth) acrylate, amyl (meth) acrylate, lauryl (meth) acrylate and cyclohexyl (meth) acrylate, hydroxyalkyl (meth) acrylates such as hydroxyethl (meth) acrylate and hydroxypropyl (meth) acrylate, glycidyl (meth) acrylate, and benzyl acrylate.

Among them, methyl (meth) acrylate is especially preferable. It is preferable that methyl (meth) acrylate accounts for 50 mol% or more in (Meth) acrylic acid esters, and more preferable is 80 mol % or more.

Vinyl monomers other than (meth) acrylic acid esters which can be used here include (meth) acrylic acid, itaconic acid, maleic acid, maleic anhydride, maleimide, styrene, methyl styrene, (meth) acrylonitrile, (meth) acrylamide, acryloylmorpholine, vinylpyrrolidone, vinyl methyl ether, vinyl acetate, methyl vinyl ketone, vinyl chloride, vinylidene chloride, ethylene, propylene, and 4-methylpentene.

Comonomers other than vinyl monomers, which can be used here include dienes such as butadiene and isoprene, acetylene and its substituent derivatives.

Thermoplastic resins other than the polymers obtained from vinyl monomers, which can be used here include such polymers as polyethers, polyesters, polyamides, polyimides, polyurethane and polyurea. If an epoxy resin is used as the thermosetting resin, it is preferable to use a polyether, especially a polyoxyalkylene having regard to its compatibility with the epoxy resin and ease of obtaining a polymer having a high molecular weight. Among polyoxyalkylenes, polyoxyethylene can be preferably used.

The thermoplastic resins which can be used as the component B include many marketed products. For example, polymethyl methacrylate and polymers produced with methyl methacrylate as a main raw material are marketed as MP-1450 (weight average molecular weight 250,000 - 500,000, Tg 128°C),MP-1451 (weight average molecular weight 500,000 -1,500,000, Tg 128°C), MP-2200 (weight average molecular weight 1,000,000 - 1,500,000, Tg 128°C; produced by Soken Kagaku K.K.), "Dianal" (registered trade name) BR-85 (weight average molecular weight 280,000, Tg105°C), "Dianal" BR-88 (weight average molecular weight 480,000, Tg 105°C, "Dianal" BR-108 (weight average molecular weight 550,000, Tg 90°C) (respectively produced by Mitsubishi Rayon Co., Ltd), and "Matsumoto Microsphere" M, M100, M500 (weight average molecular weight 1,000,000 - 1,500,000, Tg 105°C; produced by Matsumoto Yushi Seiyaku K.K.).

Polyvinylpyrrolidone is marketed as "Luviskol" (registered trade name) K80 (weight average molecular weight 900,000, Tg 150 - 185°C) and "Luviskol" K90 (weight average molecular weight 1,200,000, Tg 150 - 185°C) (respectively produced by BASF Japan K.K.).

Furthermore, polyoxyethylene is marketed as PE0-3 (weight average molecular wright 600,000 - 1,100,000, melting point 150°C or higher, and PE0-8 (weight average molecular weight 1,700,000 - 2,200,000, melting point 150°C or higher) (respectively produced by Sumitomo Seika K.K.).

A thermosetting resin is, in most cases, used in combination with a curing agent. The curing agent used is a compound with functional groups capable of reacting with the thermosetting resin or a compound acting as a catalyst in the polymerization reaction of the thermosetting resin.

The curing agents which can be used for epoxy resins include aromatic amines such as diaminodiphenylmethane and diaminodiphenylsulfone, aliphatic amines, imidazole derivatives, dicyandiamide, tetramethylguanidine, thiourea-modified amines, carboxylic anhydrides such as methylhexahydrophthalic anhydride, carboxylic acid hydrazides, carboxylic acid amides, polyphenol compounds, novolak resins, polymercaptans and Lewis acid complexes such as a boron fluoride ethylamine complex.

An addition product with curing activity obtained by allowing any of these curing agents and an epoxy resin to react with each other can also be used as a curing agent. These curing agents, in microcapsulated form, can also be suitably used since they improve storage of the prepreg.

Any of these curing agents can be used in combination with a suitable curing accelerator for improving the curing activity. In the case of an epoxy resin, preferable are a combination consisting of dicyandiamide as a curing agent and a urea derivative or imidazole derivative as a curing accelerator, a combination consisting of a carboxylic anhydride or polyphenol compound as a curing agent and a tertiary amine or imidazole derivative as a curing accelerator.

Urea derivatives which can be used here include compounds obtained by reaction between a secondary amine and an isocyanate, for example, compounds with a chemical structure represented by the following formula (4): 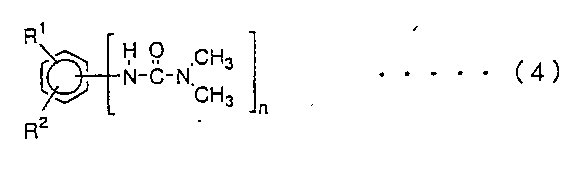 where R¹ and R² stand for, respectively independently, an atom or group H, C1, CH₃, OCH₃ or NO₂ (n = 1 or 2).

Specifically, 3-phenyl-1,1-dimethylurea or 3-(3,4- dichlorphenyl)-1,1-dimethylurea (DCMU) can, for example, be preferably used. DCMU is represented by the following structural formula (5):

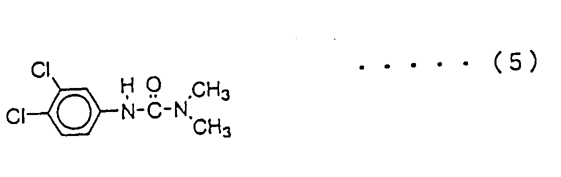

Among these combinations of a curing agent and a curing accelerator for epoxy resins , a combination consisting of dicyandiamide and a urea derivative represented by the above formula (4) can be especially preferably used, since it causes hardening at a relatively low temperature and is good in storage stability.

The thermosetting resin composition as the resin composition for a fibre reinforced composite of the present invention can contain a polymer which is not a component B, for such purposes as improving the adhesion between the matrix resin and the reinforcing fibres, improving the toughness of the matrix resin and improving the impact resistance of the fibre reinforced composite.

If a thermoplastic resin with highly polar group, especially hydrogen-bondable functional groups is used in the polymer, the adhesiveness between the matrix resin and the reinforcing fibres can be further improved.

The hydrogen-bondable functional groups include alcoholic hydroxyl groups, amide groups, imide groups and sulphonyl groups.

Polymers with alcoholic hydroxyl groups include polyvinyl acetal resins such as polyvinyl formal and polyvinyl butyryl and phenoxy resins. Polymers with amide groups include polyamides. Polymers with imide groups include polyimides. Polymers with sulphonyl groups include polysulfones. The polyamides, polyimides and polysulfones may have ether bonds or functional groups such as carbonyl groups at the main chain. The polyamides may have substituent groups at the nitrogen atoms of the amide groups. Among them, polyamides, polyamides and polysulfones are also useful for improving the toughness of the matrix resin.

Polymers with hydrogen-bondable functional groups soluble in epoxy resins include the following marketed products.

Polyvinyl acetal resins include "Denka Butyral" and "Denka Formal" (produced by Denki Kagaku Kogyo K.K.), and "Vinylec" (produced by Chisso K.K.). Phenoxy resins include "UCAR" PKHR (produced by Union Carbide). Polyamide resins include "Macromelt" (produced Henkel Hakusui K.K.) and "Amilan" CM4000 (produced by Toray Industries Inc.). Polyamides include "Ultem" (produced by General Electric) and "Matrimid" 5218 (produced by Ciba). Polysulfones include "Victrex" (produced by Mitsui Toatsu Chemicals, Inc.( and "UDEL" (produced by Union Carbide). These resins have the following chemical structures: 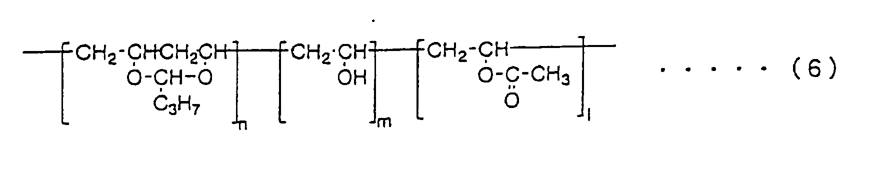 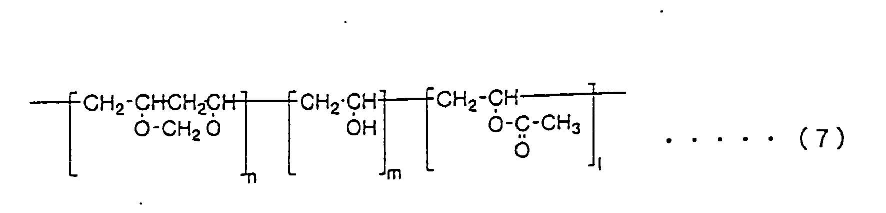 (where D stands for a hydrocarbon group with 32 carbon atoms in the molecule of dimer acid). 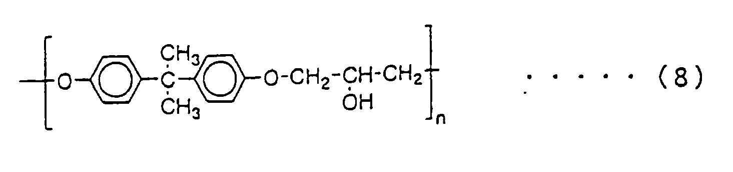 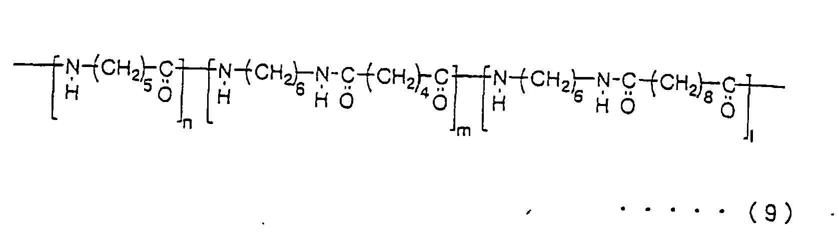 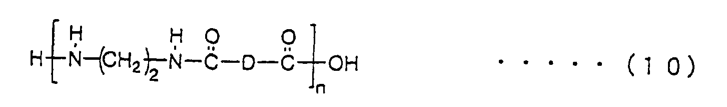 (where D stands for a hydrocarbon group with 32 carbon atoms in the molecule of dimer acid.)

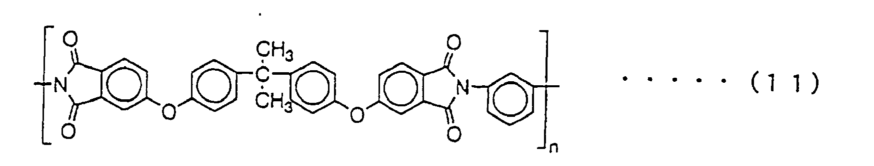

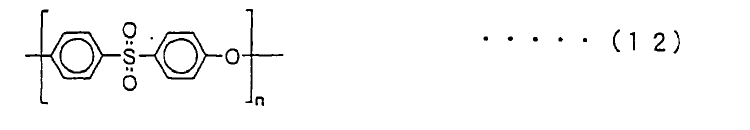

As the polyvinyl acetal resin, a resin with polyvinyl formal having 60 wt% or more of vinyl formal component is preferable in view of the mechanical properties of the composite.

As the polymer, a compound with a bending elastic modulus of 10 MPa or more at 25°C is preferable since the hardened product of the epoxy resin composition is unlikely to decline in elastic modulus. Furthermore, the thermoplastic resin of the present invention can contain such additives as a reactive diluent, antioxidant and organic or inorganic particles.

As the reactive diluent, a monofunctional epoxy compound can be preferably used. It can be selected from butyl glycidyl ether, 2-ethylhexyl glycidyl ether, phenyl glycidyl ether, cresyl glycidyl ether, p-sec-butyl glycidyl ether and p-tert-butyl glycidyl ether.

The antioxidants which can be preferably used here include phenol based antioxidants such as 2, 6-di-tert-butyl-p-cresol (BHT), butylated hydroxyanisol and tocophenol, and sulfur based antioxidants such as dilaury 3, 3'-thiodipropionate, and distearyl 3, 3'-thiodipropionate.

The organic particles which can be used here include fine particles of thermoplastic resins, hardened thermosetting resins and elastomers. These particles are effective for improving the toughness of the resin and improving the impact resistance of the fibre reinforced composite.

The thermoplastic resins which can preferably be used as organic particles include polyamides and polyimides, and the thermosetting resins which can be preferably used include epoxy resins, phenol resins, etc. Marketed polyamide particles include SP-500 produced by Toray Industries, Inc. and "Orgasole" produced by Atocham.

Elastomer particles which can be preferably used include crosslinked rubber particles, and core-shell type rubber particles obtained by graft polymerizing a different polymer on the surfaces of crosslinked rubber particles.

Marketed crosslinked rubber particles include XER-91 (produced by Japan Synthetic Rubber Co., Ltd.) which is a crosslinked carboxyl modified butadiene - acrylonitrile copolymer, CX-MN series (Nihon Shokubai K.K.) and YR-500 series (produced by Tohto Kasei K.K.) respectively of fine acrylic rubber particles.

Marketed core-shell type rubber particles include "Kureha Paraloid" EXL-2655 (produced by Kureha Chemical Industry Co., Ltd.) which is a butadiene alkyl methacrylate styrene copolymer, "Stafiloid" AC-3355 and TR-2122 (produced by Takeda Chemical Industries, Ltd.) which are acrylate methacrylate copolymers and "PARALOID" EXL-2611 and EXL-3387 (produced by Rohm & Haas) which are butyl acrylate methyl methacrylate copolymers.

Inorganic particles which can be used here include silica, alumina, smectites and synthetic mica. These inorganic particles are added mainly for rheology control, thickening and thixotropy control.

To let the prepreg manifest moderate drapability, it is preferable that the complex viscosity η* of the matrix resin is 200 to 2,000 Pa.s. If the complex viscosity η* is larger than this range, the drapability of the prepreg becomes insufficient and the impregnation into the reinforcing fibres is unlikely to be achieved. If the complex viscosity η* is smaller than this range, the form retention of the prepreg may decline.

On the other hand, the storage modulus G' of the matrix resin is generally recognized to have correlation with tackiness. A prepreg using a matrix resin large in storage modulus G' tends to be excellent in tackiness. To manifest moderate tackiness, it is necessary mat the storage modulus G' is 100 to 2,000 Pa. If the storage modulus G' is larger than this range, tackiness is too large, and when prepreg sheets are overlaid by mistake, it is difficult to separate them, making it difficult to correct the mistake. If the storage modulus G' is smaller than this range, taekmess is too small, and the overlaid prepreg sheets are liable to be delaminated in the step of prepreg lamination, thus causing an inconvenience during the lamination work.

For windability of a prepreg around a mandrel, the balance between tackiness and drapability is important. Hence, the ratio of storage modulus G' to complex viscosity η*, i.e., G'/η* can be used as an index for obtaining good windability. It is proposed that the ratio of G'/η* satisfies the relation of 0.9 ≤ G'/η* ≤ 2.0, since both tackiness and drapability can
be good.

If reinforcing fibres are impregnated with the resin composition for a fibre reinforced composite of the present invention, a prepreg can be produced as an intermediate material for a fibre reinforced composite.

The reinforcing fibres which can be used for producing the prepreg include carbon fibres, glass fibres, aramid fibres, boron fibres, alumina fibres and silicon carbide fibres. Two or more kinds of these fibres can also be used together. The form and arrangement of the reinforcing fibres are not limited. For example, fibre structures such as long fibres collimated in one direction, single tow, woven fabric, knitted fabric, non woven fabric, mat and braid can be used.

To produce light-weight sports goods such as golf shafts and fishing rods, it is preferable to use reinforcing fibres with a high elastic modulus for producing the prepreg to let the product manifest a sufficient rigidity by adding small amounts of materials. It is preferable that the elastic modulus of the reinforcing fibres is 200 to 800 GPa.

Especially when carbon fibres are used as reinforcing fibres, the strength and elastic modulus of the obtained fibre reinforced composite greatly depend on the carbon fibre content. Therefore, when a certain amount of reinforcing fibres are present, the weight of the product can be reduced with the performance of the composite and final product kept almost constant by decreasing the amount of the matrix resin to be impregnated. For this purpose, a prepreg high in reinforcing fibre content can be suitably used. In this case, it is preferable that the reinforcing fibre content of the prepreg is 60 to 90 wt%, and a more preferable range is 67 to 80 wt%. If the resin composition of the present invention is used for producing a prepreg with a high reinforcing fibre content, the handling convenience such as tackiness, drapability and windability around a mandrel, and furthermore physical properties after curing can be excellent and indeed far superior to the properties achieved by conventional techniques.

The tackiness T of the prepreg can be quantitatively evaluated by bonding 50 mm x 50 mm prepreg samples by pressure contact at a load of 0.11 MPa and measuring the peel strength (MPa). Drapability D can be quantitatively evaluated as the inverse number (GPa⁻¹) of 0° bending elastic modulus of a prepreg measured by the three-point bending test.

The peels strength T of a prepreg can be measured by bonding 50 mm x 50 mm prepreg samples by pressure contact at 0.11 MPa and peeling, and dividing the maximum load at that time by the area of the prepreg.

The bending elastic modulus of a prepreg can be obtained by bending a 85 mm fibre direction) x 15 mm prepreg sample at three points with the distance between support points kept at 40 mm using an indentor with a diameter 4 mm, to obtain a load-displacement curve, and using the gradient of the initial straight portion.

The above measurement is effected in an environment of 23 ± 2°C and 50 ± 5 % RH.

In the present invention, it is preferable that the tackiness index T of a prepreg is 0.05 to 0.20 MPa.

It is preferable that the drapability index D of a prepreg is 0.01 to 0.1 GPa⁻¹

Furthermore, for the windability of a prepreg around a mandrel, since the balance between the tackiness and drapability of a prepreg is important, it is preferable that T and D satisfy the relation of 2.3 x 10⁻³ ≤ D.T ≤ 1.2 x 10⁻².

In the present invention, a prepreg can be produced, for example, by dissolving the resin composition for a fibre reinforced composite into an organic solvent such as methyl ethyl ketone or methanol, to lower the viscosity, and impregnating reinforcing fibres with it (so-called wet method), or by heating the resin composition for a fibre reinforced composite, to lower the viscosity and impregnating reinforcing fibres with it (so-called hot melt method or dry method).

In the wet method, reinforcing fibres are immersed in a resin composition solution, pulled up and treated in an oven, to evaporate the solvent, for obtaining a prep reg. In the hot melt method, at first releasing paper is coated with a resin composition to prepare a resin film, and the film is overlaid on reinforcing fibres from one side or bo th sides. Then, the laminate is heated and pressurized, for impregnation with the resin, to produce a prepreg. As another version of the hot melt method, while a reinforcing fibre bundle is unwound, it is directly impregnated with a resin composition, to produce a prepreg, without using the film prepared by coating with the resin composition. The prepreg prepared by the wet method is likely to leave the solvent which can cause voids to be formed in the composite. Hence, in the present invention, it is preferable to produce the prepreg according to the hot melt method.

The prepreg obtained as described above is cut to obtain patterns which are then laminated, and the laminate is pressurised while the resin is heated to be cured, for obtaining a fibre reinforced composite. Heating and pressurization can be effected by, for example, the press molding method, autoclave molding method, bag molding method, sheet winding method or internal pressure molding method. Especially for sports goods, the sheet winding method or internal pressure molding method can be preferably adopted.

In the sheet winding method, a prepreg is wound around a mandrel to form a cylinder, and the method is suitable for producing rods such as golf shafts and fishing rods. In more detail, a prepreg is wound around a mandrel and fixed so as not to peel from the mandrel, or a thermoplastic resin tape (wrapping tape) is wound around the prepreg wound around a mandrel, to give a forming pressure to the prepreg, and the resin is heated and hardened in an oven. Then, the mandrel is pulled out, to obtain a cylinder.

In the internal pressure molding method, a preform with a prepreg wound around internal pressurizer made of a thermoplastic resin is set in a mold, and high pressure air is introduced into the internal pressurizer, for pressurization while the mold is heated, to mold a fibre reinforced composite. The internal pressure molding method can be suitably used for forming a specially formed golf shaft or bat, especially a complicated form like a racket for tennis or badminton.

If the resin composition for a fibre reinforced composite of the present invention is used, a prepreg excellent in tackiness and drapability and good windability around a mandrel can be obtained even if high elastic modulus carbon fibres are used as the reinforcing fibres, or even if the reinforcing fibre content is large.

As described above, according to the present invention, since a matrix resin containing a thermoplastic resin with the molecular weight kept in a specific range and soluble in a thermosetting resin is used to produce a prepreg, the prepreg obtained can be very good in both tackiness and drapability and also good in windability around a mandrel, an can be used to produce a fibre reinforced composite at hight working efficiency.

### Examples

Preferred embodiments of the present invention are now described below in more detail with reference to Examples. The solubility parameter, dynamic viscoelasticity, the tackiness and drapability of a prepreg and the windability of a prepreg around a mandrel were evaluated under the following conditions.

### A. Solubility parameter

Based on the Fedors' method stated in Polym. Eng. Sci., 14 (2), 147-154 (1974), solubility parameter SP value was obtained.

### B. Dynamic viscoelasticity

The dynamic viscoelasticity was measured using Dynamic Analyzer Model RDA11 produced by Rheometrics. For measurement, parallel plates of 25 mm radius were used, to measure the complex viscosity η* and the storage modulus G' at a measuring frequency of 0.5 Hz at a heating rate of 1.5°C/min in time/curing sweep.

### C. Tackiness of prepreg

Preparing sheets were bonded by pressure contact and peeled, and the maximum load in this case was divided by the area of the sample, to obtain peel strength T (MPa). "Instron" (registered trade name) Model 420 Universal Testing Machine (produced by Instron Japan K.K.) was used as the measuring instrument for measurement under the following conditions.
- Environment : 23 ± 2°C, 50 ± 5% RH
- Sample : 50 x 50 min
- Loading speed : 1 mm/min
- Bonding load : 0.11 MPa
- Loading time : 5 ± 2 sec.
- Peeling speed : 10 mm/min

### D. Drapability of prepreg

In the examples, the drapability was evaluated by measuring the bending elastic modulus of a prepreg. The bending elastic modulus was measured almost according to JIS K 7074 "Bending Test Methods for Fibre Reinforced Plastics". "Instron" Model 4201 Universal Testing Machine was used as the measuring instrument for measurement under the following conditions.
- Environment : 23± 2°C, 50 ± 5 % RH
- Sample : 85 mm (fibre direction) x 15 mm
- Loading speed : 5 mm/min
- Distance between support points : 40 mm
- Diameter of Indentor : 4 mm

The inverse number D (GPa⁻¹) of the 0° bending elastic modulus obtained was used as as index of drapability.

### E. Windability of prepreg around mandrel

The windability of a prepreg around a mandrel was evaluated as follows.

A prepreg which had been allowed to stand in an atmosphere of 23°C and 50% RH for 3 days was wound around a SUS cylinder with a diameter of 10 mm a length of 1000 m with an angle of 45° kept between the reinforcing fibre collimation direction and the longitudinal direction of the cylinder, and it was allowed to stand for 15 minutes, to observe the winding state of the prepreg. The winding end portions of the prepreg were classified as follows, with reference to the maximum peel height, and the peel lengths were added within the respective classes of S, M and L. Furthermore, a mandrel windability index was calculated from the following formula, as an index of windability.
S: Portions of less than 2 mm in maximum peel height
M: Portions of 2 mm to less than 4 mm in maximum peel height
L: Portions of 4 mm or more in maximum peel height
Mandrel windability index = S + 2M + 4L

### Example 1

### (1) Production of matrix resin composition

The following raw materials were kneaded using a kneader, to produce a matrix resin composition.
Bisphenol A type epoxy resin ("Epikote" 828 produced by Yuka Shell Epoxy K.K.) 44 parts by weight.

| | |
|---|---|
| Bisphenol A type epoxy resin ("Epikote" 1001 produced by Yuka Shell Epoxy K.K.) | 7 parts by weight |
| Bisphenol A type epoxy resin ("Epikote" 1009 produced by Yuka Shell Epoxy K.K.) | 14 parts by weight |
| Phenol novolak type epoxy resin ("Epikote" 154 produced by Yuka Shell Epoxy K.K.) | 35 parts by weight |
| Polymer A (polymethyl methacrylate; weight average molecular weight 500,000; glass transition temperature 105°C) | 2 parts by weight |
| Dicyandiamide | 4 parts by weight |
| DCMU | 4 parts by weight |

### (2) Production of prepreg

The resin composition was applied onto releasing paper using a reverse roll coater, to produce a resin film. Then, the resin film was overlaid on both sides of carbon fibres "Torayca" (registered trade name) T300B-12K (produced by Toray Industries, Inc.,) with a tensile elastic modulus of 230 GPa arranged in one direction, and the laminate was heated and pressurized (130°C and 0.4 MPa), to impregnate the fibres with the resin. Thus, an unidirectional prepreg with a carbon fibre unit weight of 150 g/m² and a matrix resin content of 35 wt% could be produced.

The tackiness, drapability and windability around a mandrel, of the prepreg were good. The results are shown in Table 1.

### Example 2

### (1) Production of matrix resin composition

The following raw materials were kneaded using a kneader, to produce a matrix resin composition.

| | |
|---|---|
| Bisphenol A type epoxy resin ("Epikote" 828 produced by Yuka Shell Epoxy K.K.) | 45 parts by weight |
| Bisphenol A type epoxy resin ("Epikote" 1001 produced by Yuka Shell Epoxy K.K.) | 7 parts by weight |
| Bisphenol A type epoxy resin ("Epikote" 1009 produced by Yuka Shell Epoxy K.K.) | 13 parts by weight |
| Phenol novolak type epoxy resin ("Epikote" 154 produced by Yuka Shell Epoxy K.K.) | 35 parts by weight |
| Polymer B (polymethyl methacrylate; weight average molecular weight 1,500,000; glass transition temperature 105°C) | 2 parts by weight |
| Dicyandiamide | 4 parts by weight |
| DCMU | 4 parts by weight |

### (2) Production of prepreg

A prepreg was produced as described in Example 1. The tackiness, drapability and windability around a mandrel, of the prepreg were good. The results are shown in Table 1.

### Example 3

### (1) Production of matrix resin composition

The following raw materials were kneaded using kneader, to produce a matrix resin composition.

| | |
|---|---|
| Bisphenol a type epoxy resin ("Epikote" 828 produced by Yuka Shell Epoxy K.K.) | 45 parts by weight |
| Bisphenol A type epoxy resin ("Epikote" 1001 produced by Yuka Shell Epoxy K.K.) | 7 parts by weight |
| Bisphenol A type epoxy resin ("Epikote" 1009 produced by Yuka Shell Epoxy K.K.) | 13 parts by weight |
| Phenol novolak type epoxy resin ("Epikote" 154 produced by Yuka Shell Epoxy K.K.) | 35 parts by weight |
| Polymer C (poly(methyl methacrylate/propyl acrylate); methyl methacrylate/propyl acrylate = 80/20 (mol/mol); weight average molecular weight 360,000; glass temperature 20°C) | 5 parts by weight |
| Dicyandiamide | 4 parts by weight |
| DCMU | 4 parts by weight |

### (2) Production of prepreg

A prepreg was produced as described in Example 1. The tackiness, drapability and windability around a mandrel, of the prepreg were good. The results are shown in Table 1. Example 4

### (1) Production of matrix resin composition

The following raw materials were kneaded using a kneader, to produce a matrix resin composition.

| | |
|---|---|
| Bisphenol A type epoxy resin ("Epikote" 828 produced by Yuka Shell Epoxy K.K.) | 45 parts by weight |
| Bisphenol A type epoxy resin ("Epikote" 1001 produced by Yuka Shell Epoxy K.K.) | 7 parts by weight |
| Bisphenol A type epoxy resin ("Epikote" 1009 produced by Yuka Shell Epoxy K.K.) | 13 parts by weight |
| Phenol novolak type epoxy resin ("Epikote" 154 produced by Yuka Shell Epoxy K.K.) | 35 parts by weight |
| Polymer E (polyvinylpyrrolidone; weight average molecular weight 1,200,000; glass transition temperature 150 - 185°C) | 2 parts by weight |
| Dicyandiamide | 4 parts by weight |
| DCMU | 4 parts by weight |

### (2) Production of prepreg

A prepreg was produced as described in Example 1. The tackiness, drapability and windability around a mandrel, of the prepreg were good. The results are shown in Table 1. Example 5

### (1) Production of matrix resin composition

The following raw materials were kneaded using a kneader, to produce a matrix resin composition.

| | |
|---|---|
| Bisphenol A type epoxy resin ("Epikote" 828 produced by Yuka Shell Epoxy K.K.) | 45 parts by weight |
| Bisphenol A type epoxy resin ("Epikote" 1001 produced by Yuka Shell Epoxy K.K.) | 7 parts by weight |
| Bisphenol A type epoxy resin ("Epikote" 1009 produced by Yuka Shell Epoxy K.K.) | 13 parts by weight |
| Phenol novolak type epoxy resin ("Epikote" 154 produced by Yuka Shell Epoxy K.K.) | 35 parts by weight |
| Polymer F (polyoxyethylene; weight average molecular weight 1,700,000 to 2,200,000; melting point 150°C or higher) | 2 parts by weight |
| Dicyandiamide | 4 parts by weight |
| DCMU | 4 parts by weight |

### (2) Production of prepreg

A prepreg was produced as described in Example 1. The tackiness, drapability and windability around a mandrel, of the prepreg were good. The results are shown in Table 1.

### Comparative Example 1

### (1) Production of matrix resin composition

The following raw materials were kneaded using a kneader, to produce a matrix resin composition.

| | |
|---|---|
| Bisphenol A type epoxy resin ("Epikote" 828 produced by Yuka Shell Epoxy K.K.) | 44 parts by weight |
| Bisphenol A type epoxy resin ("Epikote" 1001 produced by Yuka Shell Epoxy K.K.) | 7 parts by weight |
| Bisphenol A type epoxy resin ("Epikote" 1009 produced by Yuka | |
| Shell Epoxy K.K.) | 14 parts by weight |
| Phenol novolak type epoxy resin ("Epikote" 154 produced by Yuka Shell Epoxy K.K.) | 35 parts by weight |
| Dicyandiamide | 4 parts by weight |
| DCMU | 4 parts by weight |

### (2) Production of prepreg

A prepreg was produced as described in Example 1. Since the tackiness of the prepreg was weak, the handling convenience was poor. Furthermore, since the tackiness was weak, the windability around a mandrel was poor. The results are shown in Table 2. Comparative Example 2

### (1) Production of matrix resin composition

The following raw materials were kneaded using a kneader, to produce a matrix resin composition.

| | |
|---|---|
| Bisphenol A type epoxy resin ("Epikote" 828 produced by Yuka Shell Epoxy K.K.) | 45 parts by weight |
| Bisphenol A type epoxy resin ("Epikote" 1001 produced by Yuka Shell Epoxy K.K.) | 7 parts by weight |
| Bisphenol A type epoxy resin ("Epikote" 1009 produced by Yuka Shell Epoxy K.K.) | 13 parts by weight |
| Phenol novolak type epoxy resin ("Epikote" 154 produced by Yuka Shell Epoxy K.K.) | 35 parts by weight |
| Polymer D (polymethyl methacrylate; weight average molecular weight 100,000; glass transition temperature 105°C | 10 parts by weight |
| Dicyandiamide | 4 parts by weight |
| DCMU | 4 parts by weight |

### (2) Production of prepreg

A prepreg was produced as described in Example 1. Since the tackiness of the prepreg was weak, the handling convenience was poor. Furthermore, since the tackiness was weak, the windability around a mandrel was poor. The results are shown in Table 2. Comparative Example 3

### (1) Production of matrix resin composition

The following raw materials were kneaded using kneader to produce a matrix resin composition.

| | |
|---|---|
| Bisphenol A type epoxy resin ("Epikote" 828 produced by Yuka Shell Epoxy K.K.) | 35 parts by weight |
| Bisphenol A type epoxy resin ("Epikote" 1001 produced by Yuka Shell Epoxy K.K.) | 30 parts by weight |
| Phenol novolak type epoxy resin ("Epikote" 154 produced by Yuka Shell Epoxy K.K.) | 35 parts by weight |
| Polyvinyl formal resin ("Vinylec" K produced by Chisso K.K.) | 7 parts by weight |
| Dicyandiamide | 4 parts by weight |
| DCMU | 4 parts by weight |

### (2) Production of prepreg

A prepreg was produced as described in Example 1. The tackiness of the prepreg was good. However, since the prepreg was hard and poor in drapability, the windability around a mandrel was poor. The results are shown in Table 2.

### Comparative Example 4

### (1) Production of matrix resin composition

The following raw materials were kneaded using a kneader, to produce a matrix resin composition.

| | |
|---|---|
| Bisphenol A type epoxy resin ("Epikote" 828 produced by Yuka Shell Epoxy K.K.) | 35 parts by weight |
| Bisphenol A type epoxy resin ("Epikote" 1001 produced by Yuka Shell Epoxy K.K.) | 30 parts by weight |
| Phenol novolak type epoxy resin ("Epikote" 154 produced by Yuka Shell Epoxy K.K.) | 35 parts by weight |
| Polyvinyl formal resin ("Vinylec" K produced by Chisso K.K.) | 10 parts by weight |
| Dicyandiamide | 4 parts by weight |
| DCMU | 4 parts by weight |

### (2) Production of prepreg

A prepreg was produced as described in Example 1. The tackiness of the prepreg was good. However, since the prepreg was hard and poor in drapability, the windability around a mandrel was poor. The results are shown in Table 2.

**[Table 1]**

| | | | Example 1 | Example 2 | Example 3 | Example 4 | Example 5 |
|---|---|---|---|---|---|---|---|
| Resin Composition | Component (A) epoxy resin (parts by weight) | | | | | | |
| | "Epikole" 818 | | 44 | 43 | 43 | 43 | 45 |
| | "Epikole" 1001 | | 1 | 7 | 7 | 7 | 7 |
| | "Epikole" 1009. (Sp value 13.8 cal^{1/1}/cm^{1/3}) | | 14 | 13 | 13 | 13 | 13 |
| | "Epikole" 154 (Sp value 10.8 cal^{1/1}/cm^{1/3} | | 35 | 35 | 33 | 35 | 35 |
| | Component (B) | | | | | | |
| | Polymer A (molecular weight 500,00 Sp value 10.0 cal^{1/1}/cm^{1/3}) | | 2 | | | | |
| | Polymer B (molecular weight 1,500,0000 Sp value 10.0 cal^{1/1}cm^{1/2}) | | | 2 | | | |
| | Polymer C (molecular weight 360,000, Sp value 10.5 cal^{1/1}/cm^{2/3}) | | | | | | |
| | Polymer D (molecular weight 100,000. Sp value 10.0 cal^{1/1}cm^{1/3}) | | | | | | |
| | Polymer D (molecular weight 1,200,000 Sp value 13.3 cal^{1/1}/cm^{3/2}) | | | | | 2 | |
| | Polymer F (molecular weight 1,700,000 2,200,000, Sp value 9.4 cal^{1/1}cm^{1/3} | | | | | | 2 |
| | Polymer formal min (Vinylec" K) | | | | | | |
| | Component (C) hardening agent and hardening accelerator | | | | | | |
| | Dicyandiamide | | 4 | 4 | 4 | 4 | 4 |
| | DCMU | | 4 | 4 | 4 | 4 | 4 |
| Dynamic viscoelasticity of resin | 25° C Complex viscosity | η* (P3 's) | 33700 | 57600 | 49700 | 52300 | 34500 |
| | Storage modulus G' (Pa) | | 34700 | 60800 | 55600 | 58400 | 32700 |
| | 50°C Complex viscosity | η* (Pa'3) | 303 | 610 | 516 | 580 | 342 |
| | Storage modulus G' (Pa) | | 341 | 809 | 809 | 494 | 338 |
| | G' η* | | 1.1 | 1.3 | 1.6 | 1.2 | 1.0 |
| Properities of prepreg | Tackiness T (MPa) | | 0.11 | 0.14 | 0.13 | 0,11 | 0.12 |
| | Diapability D (GPs⁻¹) | | 0.093 | 0.053 | 0.059 | 0.031 | 0.089 |
| | Mandrel windability Index | | 22 | 51 | 77 | 63 | 19 |

**[Table 2]**

| | | | Comparative Example 1 | Comparative Example 2 | Comparative Example 3 | Comparative Example 4 |
|---|---|---|---|---|---|---|
| Resin Composition | Companent (A) epoxy resin (parts by weight) | | | | | |
| | "Epikole" 828 | | 44 | 45 | 35 | |
| | "Epikole" 1001 | | 7 | 7 | 30 | 30 |
| | "Epikole" 1009 (Sp value 13.8 cal cm) | | 14 | 13 | | |
| | "Epikole" 154 (Sp value 10.8 cal 1/1/cm | | 35 | 35 | 35 | 35 |
| | Component (B) | | | | | |
| | Polymer A molecular weight 500,000, Sp value 10.0 cal^{1/2}cm^{1/2}) | | | | | |
| | Polymer U (molecular weight 1,500,000, Sp value 10.0 cal ^{1/2}cm^{1/2}) | | | | | |
| | Polymer C (molecular weight 360.000, Sp value 10.5 cal ¹⁰/cm¹⁰) | | | | | |
| | Polymer D (molecular weight 100,000, Sp value 10.0 cal ¹⁰/cm¹⁰) | | | 10 | | |
| | Polymer E molecular weight 1,200,000 Sp value 13.3 cal ¹⁰/cm¹⁰) | | | | | |
| | Polymer P (molacular weight 1,700,000 1,200,000, SP value 9.4 cal ¹⁰/cm¹⁰) | | | | | |
| | Polyvinyl format resin (Vinylec" K) | | | | 1 | 10 |
| | Component (Cl hadening agent and hardening accelerator | | | | | |
| | Dieyandiamide | | 4 | 4 | 4 | 4 |
| | DCMU | | 4 | 4 | 4 | 4 |
| Dynamic viscoelasticity of resin | 25°C Complex viscosity | η*(Pa.s) | 15200 | 16100 | 70600 | 88400 |
| | Storage modulus G' (Pa) | | 12300 | 15400 | 54200 | 84400 |
| | 30° C Complex viscosity | η*(P3. s) | 133 | 132 | 877 | 1270 |
| | Storage modulus G' (Pa) | | 19 | 54 | 161 | 1540 |
| | G'/ η* | | 0.1 | 0.4 | 0.9 | 1.2 |
| Properites of prepreg | Tackiness T (MPa) | | 0.04 | 0.05 | 0.14 | 0.16 |
| | Drapability D (GPa⁻¹) | | 0,125 | 0.111 | 0.037 | 0.013 |
| | Mandrel windability index | | 326 | 298 | 243 | 266 |

## Claims

1. A prepreg comprising reinforcing fibers impregnated with a resin composition, the resin composition comprising at least components A and B, wherein component A is a thermosetting resin and component B is a thermoplastic resin having a weight average molecular weight of 200,000 to 5,000,000, component B is present in the resin composition in an amount of from 0.1 to 20 parts by weight per 100 parts by weight of component A, and the difference in absolute value between a solubility parameter 5P value of component A and that of component B is from 0 to 2 inclusive such that component B is soluble in component A, the resin composition having a complex viscosity η# in a dynamic viscoelasticity measurement at a measuring frequency of 0.5 Hz at 50°C of 200 to 2,000 Pa.s, a storage modulus G' of 100 to 2,000 Pa, and the complex viscosity η# (Pa.s) and the storage modulus G' (Pa) satisfy the following relationship: $0.9 \leq {G}^{′} / η # \leq 2.0$

2. A prepreg according to claim 1, wherein the thermoplastic resin B is a polymer having a weight average molecular weight of 200,000 to 1,700,000.

3. A prepreg according to claim 2, wherein the thermoplastic resin B is a polymer having a weight average molecular weight of 350,000 to 1,700,000.

4. A prepreg according to any preceding claim, wherein the thermoplastic resin B has a glass transition temperature of 80°C or higher or a melting point of 80°C or higher.

5. A prepreg according to any preceding claim, wherein the thermoplastic resin B is a polymer obtained by polymerizing a vinyl monomer component comprising at least one vinyl monomer.

6. A prepreg according to claim 5, wherein at least 50 mol% of the vinyl monomer component is a (meth) acrylate.

7. A prepreg according to claim 6, wherein the vinyl monomer is methyl (meth) acrylate.

8. A prepreg according to claim 5, wherein 50 mol% of the vinyl monomer is vinylpyrvlidone.

9. A prepreg according to any one of claims 1 to 4, wherein the thermoplastic resin B is a polyether.

10. A prepreg according to claim 9, wherein the polyether is a polyalkylene ether.

11. A prepreg according to any preceding claim, wherein the thermoplastic resin B is present in the resin composition in an amount from 0.1 to 10 parts inclusive by weight per 100 parts by weight of the thermosetting resin A.

12. A prepreg according to claim 11, wherein the thermoplastic resin B is present in the resin composition in an amount of from 0.1 to 5 parts inclusive by weight per 100 parts by weight of the thermosetting resin A.

13. A prepreg according to any preceding claim, wherein the thermosetting resin A is selected from epoxy resins, unsaturated polyester resins, vinyl ester resins, phenol resins, melamine resins, benzoguanamine resins, urea resins, silicone resins, maleimide resins, cyanate resins, resins obtained by preliminarily polymerizing a maleimide resin and a cyanate resin, and their mixtures.

14. A prepreg according to any preceding claim, having a tackiness T of from 0.05 to 0.20 MPa inclusive, and a drapability D of from 0.01 to 0.1 GPa⁻¹ inclusive, the relation between the tackiness T and the drapability D satisfying the following formula$2.3 \times {10}^{- 3} \leq D . T . \leq 1.2 \times {10}^{- z}$

15. A prepreg according to any preceding claim, wherein the reinforcing fibres are at least one kind of fibre selected from carbon fibres, aromatic polyamide fibres, glass fibres, silicon carbide fibres, boron fibres, alumina fibres and stainless steel fibres.

16. A prepreg according to claim 15, wherein the reinforcing fibres are carbon fibres having an elastic modulus of at least 200 GPa.

17. A fibre resin reinforced composite comprising a cured prepreg as defined in any one of claims 1 to 16.

## Patentansprüche

1. Prepreg, das Verstärkungsfasern umfasst, die mit einer Harzzusammensetzung imprägniert sind, wobei die Harzzusammensetzung zumindest die Komponenten A und B umfasst, worin Komponente A ein duroplastisches Harz ist und Komponente B ein thermoplastisches Harz mit einem gewichtsmittleren Molekulargewicht von 200.000 bis 5.000.000 ist, Komponente B in der Harzzusammensetzung in einer Menge von 0,1 bis 20 Gewichtsteilen pro 100 Gewichtsteile von Komponente A enthalten ist und der Unterschied zwischen den Absolutwerten des Löslichkeitsparameter-SP-Werts von Komponente A und jenem von Komponente B im Bereich von 0 bis 2 (Grenzen eingeschlossen) liegt, sodass Komponente B in Komponente A löslich ist, wobei die Harzzusammensetzung eine Komplexviskosität η# in einer dynamischen Viskoelastizitätsmessung bei einer Messfrequenz von 0,5 Hz und 50 °C von 200 bis 2.000 Pa.s und einen Speichermodul G' von 100 bis 2.000 Pa aufweist, und worin die Komplexviskosität η# (Pa.s) und der Speichermodul G' (Pa) der folgenden Beziehung genügen: $0 , 9 \leq {G}^{′} / η # \leq 2 , 0.$

2. Prepreg nach Anspruch 1, worin das thermoplastische Harz B ein Polymer mit einem gewichtsmittleren Molekulargewicht von 200.000 bis 1.700.000 ist.

3. Prepreg nach Anspruch 2, worin das thermoplastische Harz B ein Polymer mit einem gewichtsmittleren Molekulargewicht von 350.000 bis 1.700.000 ist.

4. Prepreg nach einem der vorangehenden Ansprüche, worin das thermoplastische Harz B eine Glastemperatur von 80 °C oder darüber oder einen Schmelzpunkt von 80 °C oder darüber aufweist.

5. Prepreg nach einem der vorangehenden Ansprüche, worin das thermoplastische Harz B ein Polymer ist, das durch Polymerisation einer Vinylmonomerkomponente, die zumindest ein Vinylmonomer umfasst, erhalten ist.

6. Prepreg nach Anspruch 5, worin zumindest 50 Mol-% der Vinylmonomerkomponente ein (Meth)acrylat sind.

7. Prepreg nach Anspruch 6, worin das Vinylmonomer Methyl(meth)acrylat ist.

8. Prepreg nach Anspruch 5, worin 50 Mol-% des Vinylmonomers Vinylpyrrolidon sind.

9. Prepreg nach einem der Ansprüche 1 bis 4, worin das thermoplastische Harz B ein Polyether ist.

10. Prepreg nach Anspruch 9, worin der Polyether ein Polyalkylenether ist.

11. Prepreg nach einem der vorangehenden Ansprüche, worin das thermoplastische Harz B in der Harzzusammensetzung in einer Menge von 0,1 bis 10 Gewichtsteilen (Grenzen eingeschlossen) pro 100 Gewichtsteile des duroplastischen Harzes A enthalten ist.

12. Prepreg nach Anspruch 11, worin das thermoplastische Harz B in der Harzzusammensetzung in einer Menge von 0,1 bis 5 Gewichtsteilen (Grenzen eingeschlossen) pro 100 Gewichtsteile des duroplastischen Harzes A enthalten ist.

13. Prepreg nach einem der vorangehenden Ansprüche, worin das duroplastische Harz A aus Epoxidharzen, ungesättigten Polyesterharzen, Vinylesterharzen, Phenolharzen, Melaminharzen, Benzoguanaminharzen, Harnstoffharzen, Siliconharzen, Maleinimidharzen, Cyanatharzen, Harzen, die durch Vorpolymerisation eines Maleinimidharzes und eines Cyanatharzes erhalten wurden, und Gemischen davon ausgewählt ist.

14. Prepreg nach einem der vorangehenden Ansprüche, das eine Zähigkeit T von 0,05 bis 0,20 MPa (Grenzen eingeschlossen) und eine Drapierbarkeit D von 0,01 bis 0,1 GPa⁻¹ (Grenzen eingeschlossen) aufweist, worin die Beziehung zwischen der Zähigkeit T und der Drapierbarkeit D folgender Formel genügt: $2 , 3 \times {10}^{- 3} \leq D . T \leq 1 , 2 \times {10}^{- 2}$

15. Prepreg nach einem der vorangehenden Ansprüche, worin die Verstärkungsfasern zumindest eine Art von Fasern, ausgewählt aus Kohlefasern, aromatischen Polyamidfasern, Glasfasern, Siliciumcarbidfasern, Borfasern, Aluminiumoxidfasern und Stahlfasern, sind.

16. Prepreg nach Anspruch 15, worin die Verstärkungsfasern Kohlefasern mit einem Elastizitätsmodul von zumindest 200 GPa sind.

17. Faser-Harz-verstärkter Verbundwerkstoff, umfassend ein gehärtetes Prepreg nach einem der Ansprüche 1 bis 16.

## Revendications

1. Prépreg comprenant des fibres de renforcement imprégnées d'une composition de résine, la composition de résine comprenant au moins des composants A et B, où le composant A est une résine thermodurcissable et le composant B est une résine thermoplastique ayant un poids moléculaire moyen en poids de 200 000 à 5 000 000, le composant B est présent dans la composition de résine en une quantité de 0,1 à 20 parties en poids pour 100 parties en poids du composant A, et la différence de valeur absolue entre une valeur SP du paramètre de solubilité du composant A et celle du composant B est de 0 à 2 inclus de façon que le composant B soit soluble dans le composant A, la composition de résine ayant une viscosité complexe η# dans une mesure de visco élasticité dynamique à une fréquence de mesure de 0,5 Hz à 50°C de 200 à 2000 Pa.s, un module de stockage G' de 100 à 2000 Pa, et la viscosité complexe η# (Pa.s) et le module de stockage G' (Pa) satisfont la relation suivante: $0 , 9 \leq {G}^{′} / η # \leq 2 , 0$

2. Prépreg selon la revendication 1, où la résine thermoplastique B est un polymère ayant un poids moléculaire moyen en poids de 200 000 à 1 700 000.

3. Prépreg selon la revendication 2, où la résine thermoplastique B est un polymère ayant un poids moléculaire moyen en poids de 350 000 à 1 700 000.

4. Prépreg selon toute revendication précédente, où la résine thermoplastique B a une température de transition vitreuse de 80°C ou plus ou un point de fusion de 80°C ou plus.

5. Prépreg selon toute revendication précédente, où la résine thermoplastique B est un polymère obtenu par polymérisation d'un composant de monomère de vinyle comprenant au moins un monomère de vinyle.

6. Prépreg selon la revendication 5, où au moins 50% en moles du composant du monomère de vinyle est un (méth)-acrylate.

7. Prépreg selon la revendication 6, où le monomère de vinyle est (meth) acrylate de méthyle.

8. Prépreg selon la revendication 5, où 50% en moles du monomère de vinyle est de la vinylpyrrolidone.

9. Prépreg selon l'une quelconque des revendications 1 à 4, où la résine thermoplastique B est un polyéther.

10. Prépreg selon la revendication 9, où le polyéther est un polyalkylène éther.

11. Prépreg selon toute revendication précédente, où la résine thermoplastique B est présente dans la composition de résine en une quantité de 0,1 à 10 parties incluses en poids pour 100 parties en poids de la résine thermodurcissable A.

12. Prépreg selon la revendication 11, où la résine thermoplastique B est présente dans la composition de résine en une quantité de 0,1 à 5 parties incluses en poids pour 100 parties en poids de la résine thermoducissable A.

13. Prépreg selon toute revendication précédente, où la résine thermodurcissable A est sélectionnée parmi des résines époxy, des résines de polyester insaturé, des résines de vinyl ester, des résines phénol, des résines mélamines, des résines de benzoguanamine, des résines urées, des résines de silicone, des résines maléïmides, des résines de cyanate, des résines obtenues par polymérisation préliminaire d'une résine maléimide et d'une résine de cyanate, et leurs mélanges.

14. Prépreg selon toute revendication précédente, ayant une adhésivité T de 0,05 à 0,20 MPa inclus, et une drapabilité D de 0,01 à 0,1 GPa⁻¹ inclus, la relation entre l'adhésivité T et la drapabilité D satisfaisant la formule suivante $2 , 3 \times {10}^{- 3} \leq D . T . \leq 1 , 2 \times {10}^{- z}$

15. Prépreg selon toute revendication précédente, où les fibres de renforcement sont au moins un type de fibres sélectionné parmi des fibres de carbone, des fibres de polyamide aromatique, des fibres de verre, des fibres de carbone ou silicium, des fibres de bore, des fibres d'alumine et des fibres d'acier inoxydable.

16. Prépreg selon la revendication 15, où les fibres de renforcement sont des fibres de carbone ayant un module élastique d'au moins 200 GPa.

17. Composite renforcé de résine de fibres comprenant un prépreg durci tel que défini dans l'une quelconque des revendications 1 à 16.
